Europäisches Patentamt

European Patent Office

Office européen des brevets

(19)

(11) **EP 0 777 698 B1**

(12) **EUROPÄISCHE PATENTSCHRIFT**

(45) Veröffentlichungstag und Bekanntmachung des Hinweises auf die Patenterteilung:
**21.07.1999 Patentblatt 1999/29**

(51) Int Cl.⁶: **C08J 9/18**
// C08L23:02

(21) Anmeldenummer: **95944703.8**

(86) Internationale Anmeldenummer:
**PCT/EP95/03190**

(22) Anmeldetag: **11.08.1995**

(87) Internationale Veröffentlichungsnummer:
**WO 96/06129 (29.02.1996 Gazette 1996/10)**

(54) **VERFAHREN ZUR HERSTELLUNG VON EXPANDIERTEN POLYOLEFIN-PARTIKELN**

METHOD OF PREPARING EXPANDED POLYOLEFIN PARTICLES

PROCEDE DE FABRICATION DE PARTICULES DE POLYOLEFINE EXPANSEES

(84) Benannte Vertragsstaaten:
**AT BE DE ES FR GB IT NL SE**

(30) Priorität: **23.08.1994 DE 4429844**

(43) Veröffentlichungstag der Anmeldung:
**11.06.1997 Patentblatt 1997/24**

(73) Patentinhaber: **BASF AKTIENGESELLSCHAFT**
**67056 Ludwigshafen (DE)**

(72) Erfinder:
• **SCHWEINZER, Jürgen**
  **D-67227 Frankenthal (DE)**
• **FISCHER, Joachim**
  **D-67229 Grosskarlbach (DE)**
• **DE GRAVE, Isidoor**
  **D-67157 Wachenheim (DE)**
• **KÖGEL, Wolfram**
  **D-68309 Mannheim (DE)**

(56) Entgegenhaltungen:
EP-A- 0 496 111        DE-A- 4 040 908
FR-A- 1 105 745        FR-A- 1 299 767
GB-A- 1 092 032        US-A- 4 379 859
US-A- 4 532 094

**Beschreibung**

Die Erfindung betrifft ein Verfahren zur Herstellung von expandierten Polyolefin-Partikeln durch Imprägnieren von Polyolefinteilchen mit flüchtigen Treibmitteln.

Expandierte Polyolefin-Partikel werden in der Praxis nach zwei Verfahren hergestellt:

Beim Extrusionsverfahren wird das Polyolefin aufgeschmolzen und die Schmelze mit einem flüchtigen Treibmittel vermischt. Nach dem Auspressen aus dem Extruder wird das expandierte Polyolefin granuliert.

Beim Imprägnierverfahren (EP-A 53 333) werden unvernetzte Polyolefinteilchen in Wasser suspendiert und unter Druck bei einer Temperatur im Bereich des Erweichungspunktes des Polyolefins mit einem flüchtigen Treibmittel imprägniert. Danach wird entspannt, wobei die Polyolefinteilchen expandieren.

Man hat auch schon versucht, die Imprägnierung in der Gasphase durchzuführen (DE-B 1 285 722). Dabei ist es aber notwendig, die Polyolefinteilchen an ihrer Oberfläche zu vernetzen, damit sie bei den angewandten Temperaturen nicht zusammensintern. Dies hat natürlich den Nachteil, daß bei der späteren Verarbeitung das Verschweißen der Schaumpartikel zu Formkörpern ebenfalls erschwert ist. Außerdem erfordert die oberflächliche Vernetzung einen gesonderten Verfahrensschritt.

Der Erfindung lag also die Aufgabe zugrunde, expandierte Polyolefin-Partikel durch Imprägnieren mit flüchtigen Treibmitteln herzustellen, wobei die sehr energieaufwendige Extrusionstechnik und das Suspendieren der Polymerteilchen in Wasser (was ebenfalls energieaufwendig ist und Abwasserprobleme mit sich bringt) vermieden werden soll, und wobei auf eine Vernetzung der Partikeloberfläche verzichtet werden kann.

Es wurde gefunden, daß diese Aufgabe gelöst wird, wenn man teilchenförmige Propylen- oder Ethylenpolymere in einer Wirbelschicht mit gasförmigem Treibmittel unter Bedingungen, wie in Anspruch 1 definiert, imprägniert.

In der DE-A 33 17 557 ist ein Verfahren zur Herstellung von schäumbaren Polyolefin-Partikeln beschrieben. Dabei werden im Fluidstadium gehaltene Polyolefinteilchen mit einem Treibmittel in der Gasphase imprägniert. Der fluide Zustand wird durch Drehgefäße oder durch Verwendung von Rührern erreicht. Eine Fluidisierung durch Wirbelschicht wird nicht erwähnt. Bevorzugte Polyolefine sind Pfropfpolymerisate des Styrols auf Polyethylen. Derartige, größere Anteile an Polystyrolketten enthaltende Polymere sind in der Lage, längere Zeit flüchtige Treibmittel absorbiert zu halten. Dies ist jedoch bei gewöhnlichen Ethylen- und Propylenpolymerisaten nicht der Fall, so daß damit keine schäumbaren Polyolefinteilchen herstellbar sind.

Die Wirbelschicht-Technik ist zwar ein in der chemischen Verfahrenstechnik häufig angewandtes Verfahren. Es war jedoch nicht ohne weiteres zu erwarten, daß die Imprägnierung von Polyolefinteilchen im Bereich des Erweichungspunkts problemlos und ohne Verklebungen durchgeführt werden kann. Im Gegensatz zu den bisherigen Imprägnierverfahren kann auf Einbauten im Reaktor verzichtet werden.

Polyolefine im Sinne der Erfindung sind kristalline Olefinpolymerisate, deren Röntgenkristallinität bei 25°C über 25 % liegt. Für das Verfahren eignen sich Polyethylene niedriger (PE-LD), mittlerer (PE-MD) und hoher (PE-HD) Dichte, Polypropylen sowie Ethylen- und Propylencopolymere, die mindestens 50 Mol.-% Ethylen- und/oder Propylen-Einheiten enthalten. Geeignete Comonomere sind beispielsweise α-Olefine mit bis zu 12 Kohlenstoffatomen, wie Propylen, Buten, Penten, Hexen, Octen, ferner Vinylester, wie Vinylacetat, Ester der Acrylsäure, Methacrylsäure, Maleinsäure oder Fumarsäure von Alkoholen, die 1 bis 8 C-Atome enthalten, sowie Ionomere. Die Olefinpolymerisate besitzen im allgemeinen einen Schmelzindex MFI (230; 2,16) (nach DIN 53 735) zwischen 0,1 und 20, vorzugsweise zwischen 0,5 und 15 und einem Kristallitschmelzpunkt zwischen 95°C und 170°C. Auch Mischungen verschiedener Olefinpolymerisate können verwendet werden.

Bevorzugt eingesetzt werden Copolymere von Propylen mit 0,5 bis 15 Gew.-% Ethylen oder einem $C_4$- bis $C_8$-α-Olefin und Copolymere von Ethylen mit 3 bis 18 Gew.-% eines $C_4$- bis $C_8$-α-Olefins (LLDPE).

Besonders bevorzugte Polyolefine sind Copolymere aus 1 bis 6 Gew.-% Ethylen und 94 bis 99 Gew.-% Propylen.

Die Teilchengröße der Polyolefinteilchen kann in weiten Grenzen zwischen 0,1 und 6 mm schwanken, bevorzugt sind Teilchengrößen von 0,5 bis 4 mm. Die Teilchen können als Granulat, Grieß oder Pulver vorliegen.

Geeignete Treibmittel sind grundsätzlich alle organischen und anorganischen Substanzen, die bei den gewählten Temperaturen gasförmig sind, beispielsweise Kohlenwasserstoffe, Fluor- und Chlor-Kohlenwasserstoffe, sowie Kohlendioxid, Stickstoff und Edelgase. Es können auch Gemische dieser Gase eingesetzt werden. Bevorzugte Treibmittel sind Propan, Butane, Pentane, Hexane und Kohlendioxid. Bei der besonders bevorzugten Verwendung von Butan sind in der Praxis oft geringe Mengen an Stickstoff anwesend, wenn der Reaktor vor Beginn der Imprägnierung mit Stickstoff inertisiert worden war. Ein weiteres bevorzugtes Treibmittel ist Ammoniak, das ebenfalls im Gemisch mit Stickstoff eingesetzt werden kann.

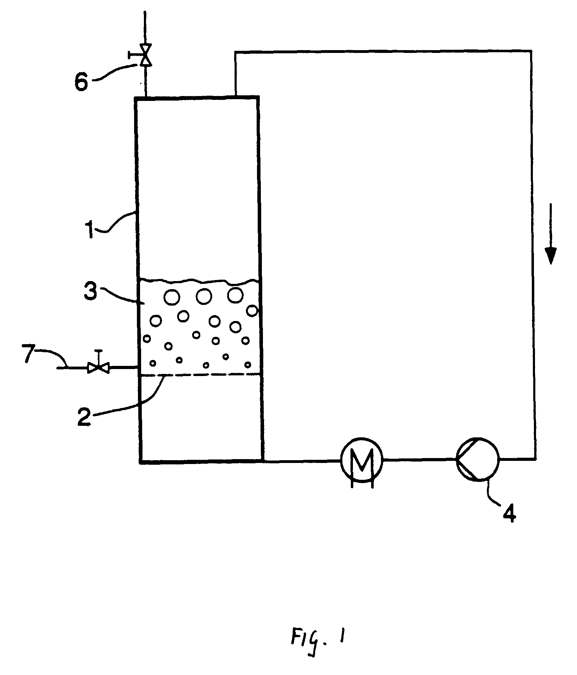

Die Zeichnung zeigt eine Skizze des bevorzugten Imprägnierreaktors. Mit (1) ist der in der Regel zylindrische Wirbelschichtreaktor mit wärmeisoliertem bzw. heizbarem Mantel bezeichnet, mit (2) der Gasverteilerboden, auf den eine Schüttung (3) der Polyolefinteilchen über die Einfüllöffnung (6) aufgebracht wird. Durch einen Kreisgasverdichter (4) wird das Treibmittel in Pfeilrichtung umgewälzt. Mittels eines Wärmetauschers (5) wird die Betriebstemperatur eingestellt und gehalten. Nach beendeter Imprägnierung wird bei (7) entspannt, worauf die nunmehr treibmittelhaltigen Polyolefinteilchen expandieren. Die Grundzüge des Wirbelschichtverfahrens sind z.B. in der Monographie "Fluidization Engineering" von Daizo Kunii und Octave Levenspiel, 2. Edition, Butterworth 1991, beschrieben.

Die Temperatur wird im Bereich des Schmelzpunktes des Polyolefins gehalten, vorzugsweise von 50°C unter bis 30°C über dem Kristallitschmelzpunkt des Polyolefins, bestimmt nach der DSC-Methode. Der Kristallitschmelzpunkt ist das Maximum der DSC-Kurve, die durch Erhitzen von 3 bis 6 mg des Polyolefingranulats auf 220°C mit einer Aufheizgeschwindigkeit von 20°C/min mit einem Differentialkalorimeter erhalten wird. Erfahrungsgemäß erniedrigen Kohlenwasserstoff den Kristallitschmelzpunkt von Polyolefinen, so daß hier ein niedriger Bereich für die Imprägniertemperatur gewählt werden kann. Bei Butan und einem Copolymeren des Propylens mit 3 Gew.-% Ethylen ist der bevorzugte Bereich 100 bis 145°C.

Der Druck beim Imprägnieren sollte vorzugsweise mindestens 25 %, insbesondere mindestens 40 % des Sättigungsdampfdrucks des Treibmittels bei der Betriebstemperatur betragen. Bei Butan liegt der optimale Druck in einem Bereich von 10 bis 30 bar.

Die Gasgeschwindigkeit U, mit der das Treibmittel umgewälzt wird, genügt der Bedingung

$$U-UMF = 0,02 \text{ bis } 1,5 \text{ m·sec}^{-1},$$

$$\text{vorzugsweise } U-UMF = 0,05 \text{ bis } 1,5 \text{ m·sec}^{-1}.$$

U ist dabei die Leerrohrgasgeschwindigkeit, bezogen auf den freien Querschnitt des Wirbelschichtreaktors oberhalb der Schüttung. UMF ist die Minimalfluidisationsgeschwindigkeit der Teilchen bei den jeweiligen Betriebsbedingungen. Die Messvorschrift zur experimentellen Ermittlung der Minimalfluidisationsgeschwindigkeit sowie eine Berechnungsgleichung hierfür sind im Kapitel 3 der genannten Monographie "Fluidization Engineering" angegeben. Bei Butan und einer Teilchengröße von 1 mm beträgt die bevorzugte Leerrohrgasgeschwindigkeit 0,15 bis 0,8 m·sec$^{-1}$.

Die Dauer des Imprägniervorgangs schwankt in weiten Grenzen zwischen 10 min und 2 h, bevorzugt zwischen 20 min und 90 min. Sie kann dadurch verkürzt werden, daß der Reaktor und/oder die Polyolefinteilchen vor dem Einfüllen in die Wirbelschicht vorgeheizt werden.

Bei dem erfindungsgemäßen Verfahren werden expandierte Polyolefin-Partikel mit einer Schüttdichte von 10 bis 250, vorzugsweise von 15 bis 150 g·l$^{-1}$ erhalten. Durch Variation von Imprägniertemperatur, Imprägnierdruck, Imprägnierzeit und Gegendruck bei der Entspannung kann die Schüttdichte gezielt eingestellt werden.

Die Polyolefinpartikel können nach bekannten Methoden zu Schaumstoff-Formkörpern verarbeitet werden, die im Automobilbau und im Verpackungswesen und der Herstellung von Sport- und Freizeitartikeln Verwendung finden.

Die im Beispiel genannten Teile und Prozente beziehen sich auf das Gewicht.

Beispiel

In einer Wirbelschicht ohne Einbauten mit einem Reaktorvolumen von ca. 6 l wurde 1 Teil eines statistischen Propylencopolymerisats mit 2,8 % Ethylen und einem Teilchendurchmesser von 1 mm unter Inertgasatmosphäre bei gleichzeitiger Fluidisation durch den Kreisgasstrom auf eine Temperatur von 80°C aufgeheizt. Beginnend bei dieser Temperatur wurden 12 Teile technisches Butan innerhalb von 15 min kontinuierlich in das Kreisgassystem dosiert. Am Ende der Dosierung lag die Gastemperatur bei 110°C und der Druck in der Anlage bei 15,5 bar (absolut). Die Gasgeschwindigkeit U ging im Verlauf der Reaktion von 0,7 auf 0,4 m·sec$^{-1}$ zurück; die UMF beträgt unter den genannten Bedingungen 0,11 m·sec$^{-1}$. Anschließend wurde das Kreisgas innerhalb von 10 min auf 128,5°C aufgeheizt und dann der Reaktorinhalt über ein Austragsventil schlagartig in einen Auffangbehälter hinein entspannt. Die Schüttdichte der entstandenen Schaumpartikel betrug 60 g·l$^{-1}$.

**Patentansprüche**

1. Verfahren zur Herstellung von expandierten Polyolefin-Partikeln durch Imprägnieren von Polyolefinteilchen mit flüchtigen Treibmitteln bei einer Temperatur, die höchstens 50°C unter und höchstens 30°C über dem Kristallitschmelzpunkt des Polyolefins liegt, wobei der Kristallitschmelzpunkt das Maximum der DSC-Kurve ist, die durch Erhitzen von 3 bis 6 mg des Polyolefingranulats auf 220°C mit einer Aufheizgeschwindigkeit von 20°C/min mit einem Differentialkalorimeter erhalten wird, dadurch gekennzeichnet, daß man teilchenförmige Propylen- oder Ethylenhomopolymere oder Copolymere, die mindestens 50 Mol % Ethylen- und/oder Propylen-Einheiten enthalten, unter Druck in einer Wirbelschicht fluidisiert und dabei mit einem Treibmittel imprägniert, das bei der gewählten Temperatur gasförmig ist, und die imprägnierten Polyolefinteilchen durch Entspannen expandiert.

2. Verfahren nach Anspruch 1, dadurch gekennzeichnet, daß Polyolefinteilchen einer Teilchengröße von 0,1 bis 6 mm eingesetzt werden.

3. Verfahren nach Anspruch 1, dadurch gekennzeichnet, daß die Imprägnierung bei einem Druck durchgeführt wird, der mindestens 25 % des Sättigungsdampfdrucks des Treibmittels bei der Betriebstemperatur beträgt.

4. Verfahren nach Anspruch 1, dadurch gekennzeichnet, daß das Polyolefin ein Copolymeres des Propylens mit 0,5 bis 15 Gew.-% Ethylen und/oder $C_4$- bis $C_8$-$\alpha$-Olefin oder ein Copolymeres des Ethylens mit 3 bis 18 Gew.-% eines $C_3$- bis $C_{10}$-$\alpha$-Olefins ist.

5. Verfahren nach Anspruch 1, dadurch gekennzeichnet, daß das Treibmittel Propan, ein Butan, ein Pentan, ein Hexan oder Kohlendioxid oder eine Mischung davon ist.

6. Verfahren nach Anspruch 1, dadurch gekennzeichnet, daß das Treibmittel , Ammoniak oder eine Mischung von Ammoniak mit Stickstoff ist.

7. Verfahren nach Anspruch 1, dadurch gekennzeichnet, daß die Gasgeschwindigkeit U, mit der das Treibmittel im Kreis geführt wird, der Bedingung

$$U\text{-}UMF = 0{,}02 \text{ bis } 1{,}5 \text{ m·sec}^{-1}$$

genügt, wobei UMF die Minimalfluidisationsgeschwindigkeit der Polymerteilchen bei den Jeweiligen Betriebsbedingungen ist.

## Claims

1. A process for the production of expanded polyolefin beads by impregnating polyolefin particles with volatile blowing agents at a temperature at most 50°C below and at most 30°C above the crystallite melting point of the polyolefin, the crystallite melting point being the maximum of the DSC curve obtained by heating from 3 to 6 mg of the polyolefin granules to 220°C at a heating rate of 20°C/min, by means of a differential calorimeter, which comprises fluidizing particulate propylene or ethylene homopolymers or copolymers which contain at least 50 mol% of ethylene and/or propylene units under pressure in a fluidized bed and at the same time impregnating them with a blowing agent which is gaseous at the selected temperature, and expanding the impregnated polyolefin particles by decompression.

2. A process as claimed in claim 1, wherein polyolefin particles having a particle size of from 0.1 to 6 mm are employed.

3. A process as claimed in claim 1, wherein the impregnation is carried out at a pressure which is at least 25% of the saturation vapor pressure of the blowing agent at the operating temperature.

4. A process as claimed in claim 1, wherein the polyolefin is a copolymer of propylene with from 0.5 to 15% by weight of ethylene and/or $C_4$- to $C_8$-$\alpha$-olefin or a copolymer of ethylene with from 3 to 18% by weight of a $C_3$- to $C_{10}$-$\alpha$-olefin.

5. A process as claimed in claim 1, wherein the blowing agent is propane, a butane, a pentane, a hexane or carbon dioxide, or a mixture thereof.

6. A process as claimed in claim 1, wherein the blowing agent is ammonia or a mixture of ammonia with nitrogen.

7. A process as claimed in claim 1, wherein the gas velocity U at which the blowing agent is circulated satisfies the condition

$$U\text{ - }UMF = 0.02 \text{ to } 1.5 \text{ m·sec}^{-1},$$

where UMF is the minimum fluidization velocity of the polymer particles under the particular operating conditions.

## Revendications

1. Procédé pour la préparation de particules de polyoléfine expansées par imprégnation de particules de polyoléfine avec des agents moussants volatils à une température qui se situe au maximum à 50°C en dessous et au maximum à 30°C au-dessus du point de fusion du cristallite de la polyoléfine, le point de fusion du cristallite représentant le maximum de la courbe DSC que l'on obtient par chauffage d'une quantité de 3 à 6 mg du produit de granulation de polyoléfine à une température de 220°C à une vitesse de chauffage de 20°C/min à l'aide d'un calorimètre différentiel, caractérisé en ce qu'on soumet à une fluidisation sous pression dans un lit fluidisé, des homopolymères ou des copolymères particulaires de propylène ou d'éthylène qui contiennent des unités d'éthylène et/ou de propylène à concurrence d'au moins 50 moles %, et on les imprègne en l'occurrence avec un agent moussant qui est gazeux à la température sélectionnée, et on soumet les particules de polyoléfine imprégnées à une expansion par détente.

2. Procédé selon la revendication 1, caractérisé en ce qu'on met en oeuvre des particules de polyoléfine possédant une granulométrie de 0,1 à 6 mm.

3. Procédé selon la revendication 1, caractérisé en ce qu'on effectue l'imprégnation sous une pression qui constitue au moins 25% de la pression de vapeur de saturation de l'agent moussant à la température de service.

4. Procédé selon la revendication 1, caractérisé en ce que la polyoléfine représente un copolymère du propylène avec de l'éthylène et/ou une $\alpha$-oléfine en $C_4$-$C_8$ à concurrence de 0,5 à 15% en poids ou encore un copolymère de l'éthylène avec une $\alpha$-oléfine en $C_3$-$C_{10}$ à concurrence de 3 à 18% en poids.

5. Procédé selon la revendication 1, caractérisé en ce que l'agent moussant représente du propane, un butane, un pentane, un hexane ou du dioxyde de carbone ou encore un mélange de ces agents moussants.

6. Procédé selon la revendication 1, caractérisé en ce que l'agent moussant représente de l'ammoniac ou un mélange d'ammoniac avec de l'azote.

7. Procédé selon la revendication 1, caractérisé en ce que la vitesse de circulation du gaz U, avec laquelle on met en circuit l'agent moussant, satisfait à l'équation

$$U\text{-}UMF = 0,02 \text{ à } 1,5 \text{ m.sec}^{-1}$$

où UMF représente la vitesse de fluidisation minimale des particules de polymères dans les conditions de service respectives.

Fig. 1